# EUROPEAN PATENT SPECIFICATION

(11) **EP 2 884 836 B1**
(45) Date of publication and mention of the grant of the patent: **29.05.2019**
(21) Application number: 13829422.8
(22) Date of filing: 16.08.2013
(51) Int. Cl.: A01K 15/00, A01K 1/06, A61D 3/00

(54) **A PORTABLE ANIMAL HANDLING SYSTEM AND METHOD OF USING SAME**
TRAGBARES SYSTEM FÜR DEN TRANSPORT VON TIEREN UND VERFAHREN ZU SEINER ANWENDUNG
SYSTÈME TRANSPORTABLE DE MANUTENTION D'ANIMAUX ET SON PROCÉDÉ D'UTILISATION

(30) Priority: 16.08.2012 NZ 60187812; 25.07.2013 NZ 61361313
(43) Date of publication of application: 24.06.2015
(73) Proprietor: Highscene Limited, London EC2A 4DJ (GB)
(72) Inventor: FAGAN, Robin Christopher Feltrim, Hamilton 3204 (NZ)
(74) Representative: Laget, Jean-Loup
(86) International application number: PCT/NZ2013/000145
(87) International publication number: WO 2014/027902

(56) References cited:
- EP-A1- 1 695 617
- AU-A1- 2010 201 748
- AU-A4- 2008 100 945
- AU-B2- 292 428
- AU-B2- 2003 236 469
- FR-A1- 2 181 588
- GB-A- 2 209 455
- US-A- 4 037 564
- US-A- 4 126 104
- US-A1- 2012 192 808

## Description

### TECHNICAL FIELD

The present invention relates to a portable animal handling device. The invention has particular application to the handling of livestock, such as sheep.

### BACKGROUND ART

Animal handling devices are often used in animal husbandry to temporarily hold and restrain the animal for inspection and treatment as required.

These devices are essentially a clamp in the form of a base with a pair of opposing walls. One or both of the walls are arranged to pivot towards and away from each other. In this manner, the animal, standing on the base, can be clamped and immobilised. This allows the animal to be closely inspected or treated without the user of the device having to physically restrain the animal.

On many farms, animal handling devices are incorporated into fixed structures, such as stock yards, pens and, most commonly, races. A race is a portion of the yard used to channel livestock, such a sheep, into single file, thus allowing the selection of a single sheep from a herd as it moves through the race.

However, the drawback with such handling devices is that they are not portable, and thus any sheep that require inspection or treatment must be transported to the yards for treatment. This may involve the mustering and transportation of the sheep to the fixed structure.

This can be problematic due to time and manpower constraints, particularly on large or communal farms (which often lack the physical infrastructure, such as yards, to sort and draft the sheep prior to handling).

To overcome this problem, the handling device can be incorporated onto a transport, such as a trailer. This allows the handling device to be transported to the location of the livestock to be inspected or treated.

However, such portable handling devices are not usually used in isolation, as they require a means of channelling and guiding of the sheep into the handling device. These structures may be referred as a lead up race and essentially are sections of fencing.

The device may also be used with a drafting system, used to direct sheep after it is released from the handling device. This can be used to select animals meeting certain criteria (for example sorting animals into liveweight ranges) into an area separate from the rest of the herd.

EP1695617A1 provides an example of a known handling device which may be integrated with a mobile trailer. Disclosed is a handling device comprising moveable walls which, when operated, clamp the animal in place. Also disclosed is a lead-up race for guiding the animal towards the handling device; wherein the lead-up race is pivotally mounted to the base of the handling device, such that the lead-up race may be folded upwards, promoting some degree of compactness of the system when not in use. A further example can be seen in AU2008100945A4, which discloses a trailer-mounted handling system comprising a clamp, a foldable lead-up race, and a drafting system. The drafting system (being the exit ramp via which the animal departs after having engaged with the clamp) coincides with the body of the trailer itself. FR2181588A1 and AU292428B2 similarly disclose animal handling systems which, while ostensibly portable for being trailer-mounted are nonetheless cumbersome as they must incorporate features for allowing animals to access and leave the handling system.

These ancillary structures mean a particularly large and lengthy trailer (or two trailers in some instances) is required for transportation of the handling device, This will often mean commercial or heavy vehicles need to be used for towing the trailer, particularly if transportation or roading regulations of the country in which the trailer is used require a correlation between the engine size of the towing vehicle and the weight of the load or trailer being towed.

Furthermore, in some countries, transportation or roading regulations limit the length of trailers that may be towed by smaller engined vehicles.

This can be problematic in smaller communal farms, which can commonly be found in Europe. Such farms tend to lack the infrastructure and equipment, such as heavy vehicles, found on larger farms.

Larger trailer systems can also be difficult to manoeuvre, particularly when being used proximate to fixed structures such as races, yards and pens. The larger trailer systems also require space for storage when not in use, and this may be prohibitive on smaller farms.

It is an object of the present invention to address the foregoing problems or at least to provide the public with a useful choice.

Throughout this specification, the word "comprise", or variations thereof such as "comprises" or "comprising", will be understood to imply the inclusion of a stated element, integer or step, or group of elements integers or steps, but not the exclusion of any other element, integer or step, or group of elements, integers or steps.

Further aspects and advantages of the present invention will become apparent from the ensuing description which is given by way of example only.

### DISCLOSURE OF THE INVENTION

According to one aspect of the present invention, there is provided a portable animal handling system, the system according to claim 1 including, a chassis, wherein the chassis includes at least two ground engaging wheels, and wherein the chassis has a fore end and an aft end,
an animal handling device in the form of a clamp, wherein the clamp includes a base and two opposing walls, wherein the walls define a passageway and clamping area there between;
a fore section, wherein the fore section includes a base having two opposing sides with walls arising therefrom, wherein the walls define a passageway there between;
an aft section, wherein the aft section includes a base having two opposing sides with walls arising therefrom, wherein the walls define a passageway there between;
wherein the fore section is positioned at the fore end of the chassis, with the clamp separating the fore section from the aft section, and wherein the fore section is pivotally mounted to the chassis and is pivotally moveable relative to the chassis about a horizontal axis such that in use, the fore section may be pivoted from a stored position to an in-use position,
characterised in that
the aft section is positioned at the aft end of the chassis, wherein the aft section is pivotally mounted to the chassis and is pivotally moveable relative to the chassis about a horizontal axis such that in use, the aft section may be pivoted from a stored position to an in-use position,
and wherein at least one of the walls of the fore and aft sections are positioned within the passageway defined by the walls of the clamp when the fore and aft sections are in the stored position.

According to another aspect of the present invention, there is provided a method of using a portable animal handling system as described above, the method according to claim 14 including the step of:
a) pivoting the fore and aft sections of the system from a stored position to an in use position, and
b) directing an animal into the fore section of the system
characterised in that
at least one of the walls of the fore and aft sections are positioned within the passageway defined by the walls of the clamp when the fore and aft sections are in the stored position.

The present invention relates to a portable handling system in the form of a trailer which is configured with fore and aft sections which are pivotally moveable about the chassis of the trailer. The fore and aft sections of the trailer are configured as a lead up race and a drafting section respectively. These are pivoted from an 'on road' state, where the invention is in a configuration for transportation or storage, to an 'in use' state, in which the lead up race and drafting sections are deployed such that animals can enter and exit the system. This keeps the equipment required for handling and treating livestock on a single trailer, the trailer being of a size that allows the use of a non-commercial vehicle, such as a utility truck or passenger car, as a towing vehicle.

specification as to the livestock or animals with which the present invention is to be used as being sheep.

The invention has particular application to the handling, inspection, treatment and drafting of sheep. Drafting should be understood to mean the selection or separation of specific sheep from the rest of the herd.

The portable animal handling system includes a chassis. The chassis should be understood to mean a frame-like structure that forms a basis of a trailer and will be fabricated from materials suitable for this use, such as steel.

The chassis includes at least two ground engaging wheels. In preferred embodiments of the present invention, the wheels are paired such that they rotate about the same horizontal axis. This may be through the use of a common axle or by mounting the wheels to stub axles positioned on either side of the chassis such that they are in-line and have a common horizontal axis.

However, it should be appreciated that the number of wheels provided on the trailer is not meant to be limiting, and the chassis may include more wheels as required.

For example, the chassis may be provided with two pairs of wheels, each pair proximate to the respective corners of the chassis. This may do away with the need for additional supports for the chassis when the present invention is in use.

In preferred embodiments of the present invention, the wheels may be configured with quick release fittings to allow the wheels to be easily removed from the chassis as required. This may contingent on the vehicle safety regulations of the country in which the present invention is to be used.

This is a useful feature as it allows the user of the invention to move along the length of the trailer when it is in use without being obstructed by the wheels and any paraphernalia such as mudguards and the like. Of course, in some embodiments of the present invention, the wheels may be located underneath the chassis such that they do not extend outwards from the side of the trailer.

The chassis should be understood to have a fore end and an aft end.

The chassis should be expected to have normal paraphernalia typically associated with trailers. For example, the chassis should be understood to have towing means such as a tow ball or hook to allow it to be temporarily connected to the towing vehicle. Depending on the configuration of the chassis, the towing means may be mounted to the fore or aft end of the chassis. Persons skilled in the art will readily appreciate how this would be achieved.

In preferred embodiments of the present invention, the chassis may be provided with jacks or the like. These assist in the removal of the wheels of the chassis, by raising the chassis such that the wheels are no longer in contact with the ground. Upon removal of the wheels, the jacks can then be operated to lower the chassis in its entirety to the ground.

The jacks may be any suitable jack such as a wind-up jack or timber jack. One or both of the jacks may be permanently mounted to the trailer. However, having at least one jack that is removable may be useful in the event a wheel on the towing vehicle may need to be replaced.

In preferred embodiments of the invention, the jacks are provided at the fore and aft ends of the chassis. This is preferred for maximum support but it will be appreciated that the jacks may be positioned anywhere between the fore and aft ends of the chassis.

The animal handling device should be understood to mean any suitable device that is used to temporarily hold or otherwise secure sheep for inspection and/or veterinary treatment if desired. The treatment to be performed can include, but is not limited to, crutching, shearing, pregnancy testing, ear tagging, hoof trimming or delivery of medicaments and so on.

Reference should now be made to the animal handling device as being a clamp.

In preferred embodiments of the present invention, the clamp includes a base and two opposing walls.

It should be understood that the space between the opposing walls define a passageway through which sheep may pass. The width of the passageway is such that only one sheep at a time can travel through at a time. The space between the walls also defines the clamping area.

Persons skilled in the art will appreciate that the width of the passageway may vary according to the animal species with which the present invention is to be used. For example, for pigs, the distance between the walls may be less than that required for sheep.

Preferably, the base of the clamp is formed from sheet material.

As the base of the clamp is likely to experience high impacts and loadings as sheep run through, the sheet material needs to be durable and hard wearing. A suitable material may be sheets of mild steel or plywood, toughened plastics or another material identified as being suitable for the intended use by a person skilled in the art.

In some embodiments of the present invention, the base of the clamp may include a textured surface to provide some grip should the invention be used in wet conditions, which may otherwise make the base slippery.

The base of the clamp may be of any suitable shape, but preferably is rectangular in plan view, having two shorter edges and two longer edges substantially in parallel. The longer edges of the base define the direction of travel for the sheep. However, this is not meant to be limiting and the base may take a variety of forms.

In preferred embodiments, the walls of the clamp are arranged along the longer edges of the base. One of the walls should be understood to be pivotally movable relative to the other wall. This latter wall is fixed relative to the base.

This can be achieved in a number of ways. For example, the moveable wall may be secured to the base in a hinge-like arrangement, the hinge having a horizontal axis.

It should be appreciated by persons skilled in the art that when actuated, the moveable wall moves towards the opposing fixed wall, trapping the sheep and immobilising it so that user of the device may inspect or otherwise perform treatment upon the animal. However, this is not meant to be limiting and in some embodiments of the present invention, both walls may be pivotally moveable.

In preferred embodiments of the present invention, the walls are formed from sheet material, such as plywood, and a frame of metal, for example steel, to which the sheet material is fixed. It will be appreciated that the sheet material forms the contact surface of the clamp. However, depending on the choice of material for the walls, it may not be necessary to have a frame. For example, the walls may be formed from sheets of mild steel.

Preferably, the walls are substantially rectangular with the longer dimension of the walls approximating the longer dimension of the base of the clamp.

In preferred embodiments of the present invention, the clamp is situated centrally upon the chassis.

In use, the person operating the invention will most likely be standing on the ground next to the trailer. The clamp will be elevated relative to the ground (by virtue of being mounted to the chassis) and therefore it may be difficult to closely inspect or treat the sheep.

However, it is not beyond the scope of the present invention that the chassis be provided with a user platform or the like adjacent or proximate to the clamp.

Therefore, in some embodiments of the present invention, the base of the clamp may be secured to the chassis in a gimbal arrangement such that it, and therefore the clamp, can be tilted towards the horizontal.

Persons skilled in the art will appreciate that this is not meant to be limiting and the base of the clamp may be tilted in a number of ways. For example, one edge of the base may be pivotally mounted to the chassis to allow it to moved from the horizontal (the sheep standing on the base) to the vertical (the sheep on its side). However, this may require the base to be offset on the chassis, such that the walls of the clamp rest on the chassis when it is on its side rather than being suspended over the side of the trailer.

In another embodiment of the present invention, the chassis is provided with an upright, a portion of which engages with the fixed wall of the clamp and provides a pivot about which the animal handling device can be tilted. The higher the pivot, the higher the clamp from the ground when it is tilted to the horizontal.

Tilting the base has the effect of placing any sheep held within the clamp upon its side, allowing the use of the invention easier access to the front and rear quarters of the sheep if desired.

The portable animal handling system should be understood to have fore and aft sections which are pivotally moveable relative to the chassis.

The fore and aft sections are positioned at either end of the chassis (the fore end and the aft end of the chassis respectively), with the clamp separating the respective sections. In use, the fore and aft sections increase the footprint of the animal handling system and are substantially horizontal, allowing the sheep to enter and exit the clamp.

When not in use, the fore and aft sections are pivoted into a vertical orientation. This reduces the footprint of the animal handling system to that of the chassis. This means that smaller vehicles, such as passenger or utility trucks, can still be used to tow the trailer.

In preferred embodiments of the present invention, the fore and aft sections of the handling animal device each have an end which is mounted to the respective ends of the chassis in a hinging arrangement. The free end of the fore and aft sections is able to move from a substantially vertical to a substantially horizontal orientation. To assist in the raising and lowering of each section, the hinging arrangement may include preloaded or pre-tensioned springs, gas struts or electric actuators or the like. This reduces the force that needs to be applied by the user to the sections when converting the animal handling system from an 'on road' configuration to an 'in use' configuration and vice versa.

It will be appreciated that the pivot point about which the section may move can determine the extent of travel of a particular section.

In preferred embodiments of the present invention, one section may be configured to tilt about a pivot point such that an arc of travel of over 180° is achieved.

It should be understood that the sheep will enter the animal handling device via the fore section of the animal handling system. This section of the invention shall now be referred to as the lead up section.

The lead up section of the animal handing system includes a base, the base being pivotally mounted to the chassis.

In preferred embodiments of the invention, the base of the lead up section is rectangular in plan view, having two shorter edges and two longer edges substantially in parallel.

The base is configured to have a range of movement such that the free end (i.e. the end not connected to the fore end of the chassis) of the lead up section can move from a folded or collapsed state through to being positioned on the ground at its other end in an 'in use' state. When in this latter position, the lead up section forms a ramp by which sheep may ascend and enter the clamp.

The base of the lead up section may be formed from any suitable material, such as sheets of stainless steel or the like. The base may include a textured, non-slip surface to minimise any slippage that may be experienced by the sheep as it moves up the ramp.

In some embodiments of the present invention, the base of the lead up section is simply hinged to the chassis along one edge.

However, in preferred embodiments of the present invention, the fore end of the chassis is provided with one or more vertical uprights.

The base of the lead up section may likewise include one or more vertical uprights. The uprights of the base may be connected to the uprights of the chassis via a pin or the like. This allows the rotation of the lead up section relative to the chassis. By positioning the pivot point on an upright, a greater range of movement for the lead up section may be achieved.

Rather than the lead up section being moved simply from an substantially horizontal orientation extending away from the chassis in an 'in use' configuration to a vertical orientation, it can be moved through an arc of substantially 180° or more such that it is upside down over the clamp.

This is useful when the lead up section is particularly elongate and its height, if orientated substantially vertically for storage or travel, may be an issue.

The lead up section includes two opposing walls arising from the longer edges of the base, defining a passageway there between, which leads to the clamp. It will be understood that the lead up section is orientated such that, in use, it and the walls of the clamp define a near continuous passageway.

In some embodiments of the present invention, the walls of the lead up section are pivotally movable to the base such that the walls may be collapsed when not in use.

In these embodiments of the present invention, the chassis may be provided with a vertical post to which an edge or portion of the walls may be fixed when in use to ensure that they stay upright. It will be appreciated that pins or the like may be used to pass through suitable apertures in the walls in order to engage them with suitable fittings, readily apparent to a person skilled in the art, provided on the post of the chassis.

However, in preferred embodiments of the present invention, the walls are fixed. This helps to simplify construction of the present invention.

It will be appreciated that the chassis and lead up section are dimensioned such that there is sufficient clearance between the walls and the clamp when the lead up section is pivoted into a vertical orientation or even rotated such that it is upside down over the clamp.

In some embodiments of the present invention, the chassis may include a secondary wall between the animal clamp and the lead up portion of the chassis to ensure that there are no spaces or gaps by which the animal can escape the handling device. This secondary wall may be fixed to the chassis or, in some embodiments, to the aft end (the end proximate the clamp) of the walls of the lead up section.

In this latter embodiment, the secondary wall is mounted to the aft end of the lead up section walls such that it swings about a vertical axis.

The lead up section may include a gate at the aft end of the walls. This provides a temporary barrier to sheep entering the clamp when it is not in use or perhaps when the clamp is already occupied by another sheep.

The aft section of the animal handling system should be understood to mean the end of the chassis by which the sheep exits the clamp. It can be desirable for the user of the invention to be able to select and direct specific sheep to an area separate from the rest of the herd. This selection process is referred to as drafting.

In preferred embodiments of the present invention, the aft section of the animal handling system is configured as a drafting section, and shall now be referred to as such for the remainder of this specification.

The drafting section includes a base which is hinged or otherwise pivotally mounted at other end of the chassis to the lead up section. Preferably the base of the drafting section is rectangular in plan view, having two shorter edges and two longer edges substantially in parallel.

In preferred embodiments of the present invention, the base of the drafting section is hinged to the aft end of the chassis along one edge. In this embodiment of the invention, the drafting section is not particularly elongate so it does not need to be rotated such that it is upside down. Instead, it is sufficient that it be rotated from a horizontal position extending away from the chassis to a substantially vertical position.

However, in some embodiments of the present invention, the aft end of the chassis is provided with one or more vertical uprights.

The base of the drafting section may likewise include one or more vertical uprights. The uprights of the base may be connected to the uprights of the chassis via a pin or the like and complementary fittings readily apparent to persons skilled in the art. This allows the rotation of the drafting section relative to the chassis. By positioning the pivot point on an upright, a greater range of movement for the drafting section may be achieved.

The drafting section includes opposing walls defining a passageway there between for sheep exiting the clamp. It will be understood that, in use, the lead up section, the walls of the clamp, and the drafting section defines a near continuous passageway.

In preferred embodiments of the present invention, the walls are formed from a plurality of rails fabricated from suitable materials such as tubular sections of steel or the like. The rails may be formed into distinct frame sections. Having the walls of the drafting section as an open frame work is use as it enables the sheep, while in the clamp or drafting section, to see out and readily identify a way out of the animal handling system. Consequently, when released, the sheep is more likely to quickly exit with minimal encouragement from the user of the invention.

In some embodiments of the present inventions, some frame sections may be pivotable around a vertical axis. Persons skilled in the art will readily identify ways in which this aspect of the invention may be implemented through the use of hinges and such like. Having portions of the walls of the drafting section that are pivotable, in a manner similar to a gate allows the user to control the exit of certain sheep into pre-designated areas.

For example, the present invention may be used proximate to a pen into which pregnant ewes are to be held once they have been inspected. The user may articulate the frame to divert pregnant ewes into the pen, while other animals may be diverted to a separate yard or paddock.

In some embodiments of the present invention, additional frames and rails may be provided between the clamp and the drafting section in order to ensure there are no gaps through which sheep may escape once it has been released from the clamp.

In preferred embodiments of the present invention, these secondary frames are slightly offset (inwards or outwards of the centre of the chassis) relative to the walls of the drafting section such that when the base of the drafting section is tilted into a vertical orientation, the walls and frames have sufficient clearance and are not inhibited in their respective movement.

The drafting section may also include a gate at the fore end (proximate the clamp) of its walls. This provides a temporary barrier to sheep exiting the clamp until it is appropriate to do so.

The animal handling system may include other ancillary equipment.

For example, in some embodiments of the present invention, a post and rail may be situated approximate to the clamp to which shearing devices or drenching equipment may be attached. Alternatively, ear tag reading devices may be positioned on the post and rail for ready access by the user of the present invention.

In preferred embodiments of the invention, the post may be segmented or otherwise configured such that it, and/or the rail, may be rotated relative to the chassis. This can be useful when converting the invention from an 'in use' state to a 'on road' state and vice versa.

In some embodiments of the present invention, weighing equipment may also be attached to the clamp. These may use sensors in between the base of the clamp and the chassis to determine the weight of the animal. Alternatively, the base may be formed from two layers of sheet material, separated by weight sensors.

Additionally, the chassis may include jacks or the like for additional support about the perimeter of the animal handling system.

Depending on the size of the lead up section, it is possible that the lead up section may have several sheep thereupon, the collective weight of which may exceed the weight of the drafting section of the animal handling system. The jacks provide support to prevent tilting of the chassis from the uneven distribution of weight on the animal handling system.

The present invention has a number of advantages over the prior art, including the integration of a clamp, lead up section and drafting section into a portable animal handling device, which is carried in a compact form on a single trailer.

Furthermore, the present invention is easily towed by a small passenger vehicle or all-terrain vehicle due to its size. This is an advantage in some countries where there are size limitations on the trailers that may be towed by such vehicles.

Having a portable animal handling device with collapsible sections allows the formation of an animal handling system that may be easily transported by road.

### BRIEF DESCRIPTION OF DRAWINGS

Further aspects of the present invention will become apparent from the following description which is given by way of example only and with reference to the accompanying drawings in which:
- Figure 1: is a perspective view of one embodiment of the present invention in use;
- Figure 2: is a perspective view of the embodiment of the invention illustrated in Figure 1 in an "on the road" state; and
- Figure 3: is a top view of the embodiment of the invention illustrated in Figure 2.

### BEST MODES FOR CARRYING OUT THE INVENTION

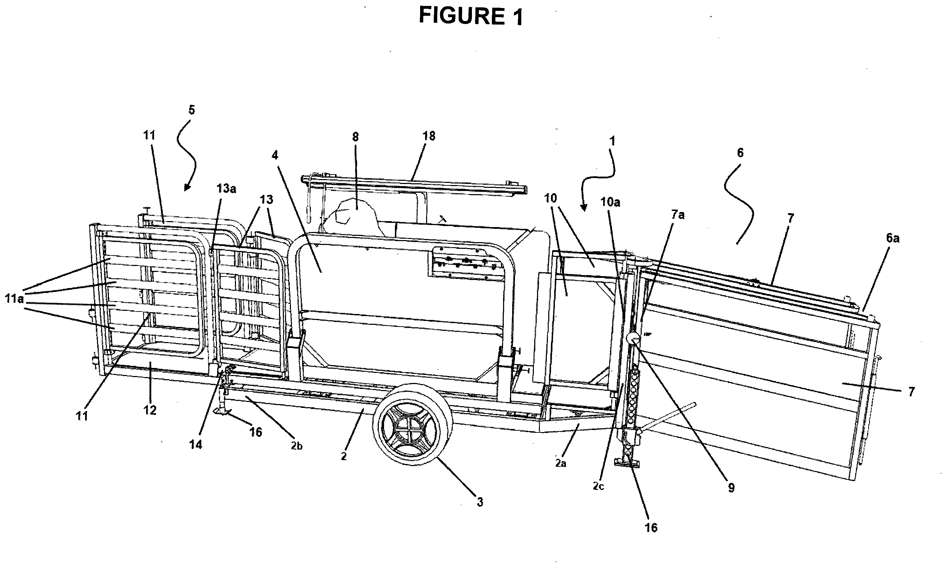

The present invention is illustrated in Figure 1 and is a portable animal handling system in the form of a trailer (generally indicated by arrow 1).

The trailer (1) includes a chassis (2), having a fore end (2a) and an aft end (2b), supported by wheels (3). The chassis includes an animal handling device in the form of a clamp (4). The clamp is situated substantially centrally upon the chassis.

The trailer (1) includes fore (6) and aft (5) sections. The fore section is in the form of a lead up section, and consists of a base (not visible) and opposing side walls (7).

The lead up section (6) forms the portion of the animal handling device (1) by which a sheep (8) enters the device. One end (6a) of the lead up section is proximate the ground (not shown).

The walls (7) of the lead up section (6) are rigid structures, and include a vertical post (7a) fixed at one end to the base (not shown). This is connected to a vertical post (2c) arising from the fore end (2a) of the chassis (2) via a pivot point (9).

It will be appreciated that the position of the pivot point (9) on the uprights (2c, 7a) allows the lead up section (6) to be moved from a substantially horizontal position extending away from the chassis (2) to a horizontal position directly over the clamp (4).

Between the lead up section (6) and the clamp (4), there are provided secondary walls (10) to ensure there are no spaces between the lead up section and the clamp through which sheep may escape. These may be hinged along a vertical axis (10a) so they may be swung back and forth as required.

These walls (10) are set slightly inwards of the edges of the fore end (2a) of the chassis (2) and the uprights (2c) of the chassis (2), to provide sufficient room for the movement of the lead up section (6) relative to the chassis.

The aft section (5) of the trailer (1) forms a drafting section by which a sheep (8) may exit the clamp (4). This section of the invention is designed to encourage the sheep to quickly exit the clamp.

Therefore, the walls (11) of the drafting section (5) are formed from lengths of metal tubing (11a), the sheep (8) being able to see through the gaps in the tubing and therefore identify their escape route from the clamp (4).

Furthermore, the base (12) of the drafting section (5) remains elevated from the ground (not shown). This allows a quick and easy escape for the sheep (8) upon release from the clamp (4).

The trailer (1) includes secondary walls (13) situated between the drafting section (5) and clamp (4). These are pivotable about a vertical axis (13a) so that, if desired, selected sheep (8) may be diverted into a separate holding area (not shown) following release from the clamp.

Like the lead up section, the drafting section (5) is mounted to the chassis (2) along a horizontal axis (14) at the aft end (2b) of the chassis such that it is pivotable in a vertical orientation.

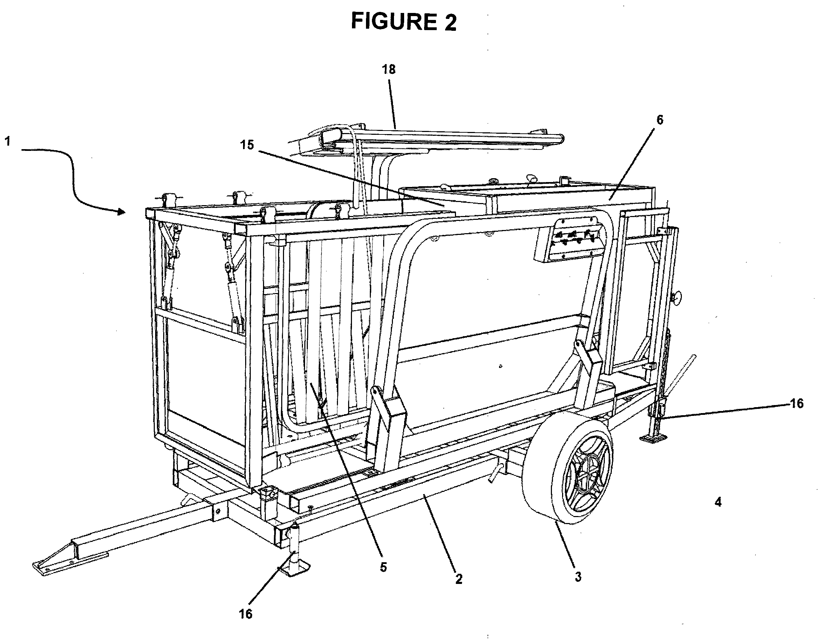

This reduces the foot print of the animal handling device, as is depicted in Figure 2.

In this view, it will be appreciated that the lead up (6) and drafting (5) sections of the animal handling device (1) have been folded into the recess (15) defined within the clamp (4).

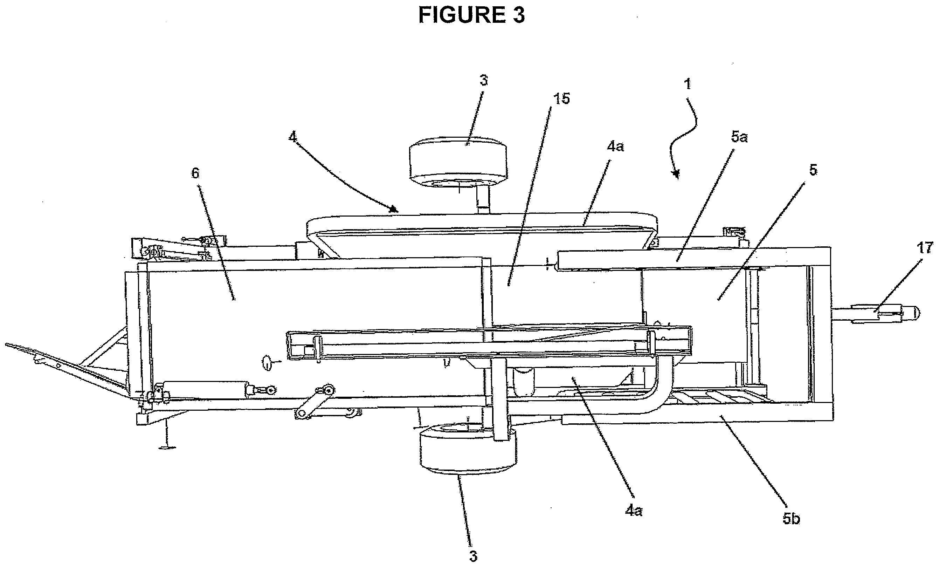

This can also be seen in Figure 3. The walls (4a) of the clamp (4) define the recess (15) into which at least one of the walls (5a) of the drafting (5) sections is situated, the other wall (5b) being positioned outside of the clamp. The walls (not visible in this view) of the lead up section (6) are similarly positioned.

This puts the animal handling device (1) into an 'on road' configuration which can be easily towed by a small vehicle (not shown).

Returning now to Figures 1 and 2, the portable handling device (1) may include ancillary equipment such as jacks (16), mounted about the chassis (2) to further enhance its support in use. This also allows the entire chassis to be raised and the wheels (3) removed before lowering the chassis to the ground (not shown) or anywhere in between.

As will be seen in Figure 3, the wheels (3) extend away from the chassis (not visible in this view). The removal of the wheels means the user (not shown) does not need to skirt around the wheels as they move the length of the portable handling device (1) when it is in an in use configuration.

The chassis (not visible) also includes a tow bar (17) by which the invention (1) may be towed.

In Figures 1 and 2 it will be seen that the portable handling device (1) also includes a stand (18). Other ancillary equipment such as clippers or ear tag reading equipment (not shown) may be supported by the stand.

Aspects of the present invention have been described by way of example only and it should be appreciated that modifications and additions may be made thereto without departing from the scope thereof as defined in the appended claims.

## Claims

1. A portable animal handling system (1), the system (1) including,
a chassis (2), wherein the chassis (2) includes at least two ground engaging wheels (3), and wherein the chassis (2) has a fore end (2a) and an aft end (2b),
an animal handling device in the form of a clamp (4), wherein the clamp (4) includes a base and two opposing walls (4a), wherein the walls (4a) define a passageway and clamping area there between;
a fore section (6), wherein the fore section (6) includes a base having two opposing sides with walls (7) arising therefrom, wherein the walls (7) define a passageway there between;
an aft section (5), wherein the aft section (5) includes a base (12) having two opposing sides with walls (11) arising therefrom, wherein the walls (11) define a passageway there between;
wherein the fore section (6) is positioned at the fore end (2a) of the chassis (2), with the clamp (4) separating the fore section (6) from the aft section (5), and wherein the fore section (6) is pivotally mounted to the chassis (2) and is pivotally moveable relative to the chassis (2) about a horizontal axis such that in use, the fore section (6) may be pivoted from a stored position to an in-use position,
**characterised in that**
the aft section (5) is positioned at the aft end (2b) of the chassis (2), wherein the aft section (5) is pivotally mounted to the chassis (2) and is pivotally moveable relative to the chassis (2) about a horizontal axis (14) such that in use, the aft section (5) may be pivoted from a stored position to an in-use position,
and wherein at least one of the walls (7, 11) of the fore (6) and aft (5) sections are positioned within the passageway defined by the walls (4a) of the clamp (4) when the fore (6) and aft (5) sections are in the stored position.

2. The portable animal handling system (1) as claimed in claim 1 wherein the wheels (3) include quick release fittings.

3. The portable animal handling system (1) as claimed in either claim 1 or claim 2 wherein the chassis (2) includes jacks (16).

4. The portable animal handling system (1) as claimed in claim 3, wherein the jacks (16) are provided at either end (2a, 2b) of the chassis (2).

5. The portable animal handling system (1) as claimed in any one of claims 1 to 4 wherein:
• one of the walls (4a) of the clamp (4) is pivotally movable relative to the other wall (4a); and/or
• the base of the clamp (4) is mounted to the chassis (2) such that in use, the clamp (4) may be tilted from a vertical orientation to a horizontal orientation.

6. The portable animal handling system (1) as claimed in any one of claims 1 to 5, wherein the chassis (2) includes a wall (10) between the clamp (4) and the fore section (6).

7. The portable animal handling system (1) as claimed in any one of claims 1 to 6, wherein the fore section (6) includes at least one vertical upright (7a).

8. The portable animal handling system (1) as claimed in claim 7, wherein the fore end (2a) of the chassis (2) includes at least one vertical upright (2c), and wherein the vertical uprights (7a, 2c) of the fore section (6) and fore end (2a) of the chassis (2) are connected via a pin (9), wherein the pin (9) defines the horizontal axis of the pivotal movement of the fore section (6).

9. The portable animal handling system (1) as claimed in any one of claims 1 to 8, wherein the walls (7,11) of the fore (6) and aft (5) sections are hingedly mounted to their respective bases.

10. The portable animal handling system (1) as claimed in any one of claims 1 to 9, wherein the chassis (2) includes a wall (13) between the clamp (4) and the aft section (5).

11. The portable animal handling system (1) as claimed in any one of claims 1 to 10, wherein the aft section (5) includes at least one vertical upright.

12. The portable animal handling system as claimed in claim 11, wherein the aft end of the chassis includes at least one vertical upright, and wherein the vertical uprights of the aft section and aft end of the chassis are connected via a pin, wherein the pin defines the horizontal axis (14) of the pivotal movement of the aft section.

13. The portable animal handling system as claimed in claim 12 wherein at least one of the walls (11) of the aft section (5) is segmented into portions, wherein at least one of the portions is pivotable around a vertical axis.

14. A method of using the portable animal handling system (1) claimed in claim 1, wherein the method includes the step of:
a) pivoting the fore (6) and aft (5) sections of the system (1) from a stored position to an in use position, and
b) directing an animal (8) into the fore (6) section of the system
**characterised in that**
at least one of the walls (7, 11) of the fore (6) and aft (5) sections are positioned within the passageway defined by the walls (4a) of the clamp (4) when the fore (6) and aft (5) sections are in the stored position.

15. The method of claim 14 wherein the animal (8) is a sheep.

## Patentansprüche

1. Tragbares Tierhandhabungssystem (1), wobei das System (1) umfasst,
ein Chassis (2), wobei das Chassis (2) mindestens zwei Bodeneingriffsräder (3) umfasst und wobei das Chassis (2) ein vorderes Ende (2a) und ein hinteres Ende (2b) aufweist,
eine Tierhandhabungsvorrichtung in Form einer Klemme (4), wobei die Klemme (4) eine Basis und zwei einander gegenüberliegende Wände (4a) umfasst, wobei zwischen den Wänden (4a) einen Durchgang und ein Klemmbereich definiert sind;
einen vorderen Abschnitt (6), wobei der vordere Abschnitt (6) eine Basis mit zwei einander gegenüberliegenden Seiten mit davon hervorstehenden Wänden (7) umfasst, wobei zwischen den Wänden (7) ein Durchgang definiert ist;
einen hinteren Abschnitt (5), wobei der hintere Abschnitt (5) eine Basis (12) mit zwei einander gegenüberliegenden Seiten mit davon hervorstehenden Wänden (11) umfasst, wobei zwischen den Wänden (11) ein Durchgang definiert ist;
wobei der vordere Abschnitt (6) am vorderen Ende (2a) des Chassis (2) positioniert ist, wobei die Klemme (4) den vorderen (6) vom hinteren Abschnitt (5) trennt, und wobei der vordere Abschnitt (6) schwenkbar am Chassis (2) montiert ist und relativ zum Chassis (2) um eine horizontale Achse schwenkbar ist, sodass bei Verwendung der vordere Abschnitt (6) aus einer Lagerstellung in eine Einsatzstellung geschwenkt werden kann,
**dadurch gekennzeichnet, dass**
der hintere Abschnitt (5) am hinteren Ende (2b) des Chassis (2) positioniert ist, wobei der hintere Abschnitt (5) am Chassis (2) schwenkbar montiert ist und relativ zum Chassis um eine horizontale Achse (14) schwenkbar ist, sodass bei Verwendung der hintere Abschnitt (5) aus einer Lagerstellung in eine Einsatzstellung geschwenkt werden kann,
und wobei mindestens eine der Wände (7, 11) der vorderen (6) und hinteren Abschnitte (5) in dem durch die Wände (4a) der Klemme (4) definierten Durchgang positioniert ist, wenn sich vorderer (6) und hinterer (5) Abschnitt in der Lagerstellung befinden.

2. System (1) nach Anspruch 1, wobei die Räder (3) Schnellspannarmaturen aufweisen.

3. System (1) nach Anspruch 1 oder 2, wobei das Chassis (2) Heber (16) umfasst.

4. System (1) nach Anspruch 3, wobei die Heber (16) an beiden Enden (2a, 2b) des Chassis (2) vorgesehen sind.

5. System (1) nach einem der Ansprüche 1 - 4, wobei:
• eine der Wände (4a) der Klemme (4) relativ zur anderen Wand (4a) schwenkbar ist und/oder
• die Basis der Klemme (4) am Chassis (2) derart montiert ist, dass bei Verwendung die Klemme (4) von einer vertikalen in eine horizontale Orientierung gekippt werden kann.

6. System (1) nach einem der Ansprüche 1 - 5, wobei das Chassis (2) eine Wand (10) zwischen Klemme (4) und vorderem Abschnitt (6) umfasst.

7. System (1) nach einem der Ansprüche 1 - 6,
wobei der vordere Abschnitt (6) mindestens einen vertikalen Pfosten (7a) umfasst.

8. System (1) nach Anspruch 7, wobei das vordere Ende (2a) des Chassis (2) mindestens einen vertikalen Pfosten (2c) umfasst, und wobei die vertikalen Pfosten (7a, 2c) des vorderen Abschnitts (6) und des vorderen Endes (2a) des Chassis (2) über einen Stift (9) verbunden sind, wobei der Stift (9) die horizontale Achse der Schwenkung des vorderen Abschnitts (6) definiert.

9. System (1) nach einem der Ansprüche 1 - 8, wobei die Wände (7, 11) der vorderen (6) und hinteren Abschnitte (5) gelenkig an ihren jeweiligen Basen montiert sind.

10. System (1) nach einem der Ansprüche 1 - 9, wobei das Chassis (2) eine Wand (13) zwischen Klemme (4) und hinterem Abschnitt (5) umfasst.

11. System (1) nach einem der Ansprüche 1 - 10, wobei der hintere Abschnitt (5) mindestens einen vertikalen Pfosten umfasst.

12. System nach Anspruch 11, wobei das hintere Ende des Chassis mindestens einen vertikalen Pfosten umfasst, und wobei die vertikalen Pfosten des hinteren Abschnitts und des hinteren Endes des Chassis über einen Stift verbunden sind, wobei der Stift die horizontale Achse (14) der Schwenkung des hinteren Abschnitts definiert.

13. System nach Anspruch 12, wobei mindestens eine der Wände (11) des hinteren Abschnitts (5) in Abschnitte segmentiert ist, wobei mindestens einer der Abschnitte um eine vertikale Achse schwenkbar ist.

14. Verfahren zur Verwendung des tragbaren Tierhandhabungssystems (1) nach Anspruch 1, wobei das Verfahren den Schritt umfasst:
a) Schwenken der vorderen (6) und hinteren Abschnitte (5) des Systems aus einer Lagerstellung in eine Einsatzstellung und
b) Führen eines Tiers (8) in den vorderen Abschnitt (6) des Systems hinein,
**dadurch gekennzeichnet, dass**
mindestens eine der Wände (7, 11) der vorderen (6) und hinteren Abschnitte (5) in dem durch die Wände (4a) der Klemme (4) definierten Durchgang positioniert ist, wenn sich vorderer (6) und hinterer (5) Abschnitt in der Lagerstellung befinden.

15. Verfahren nach Anspruch 14, wobei das Tier (8) ein Schaf ist.

## Revendications

1. Système portatif de manipulation d'animaux (1), ce système (1) comprenant
un châssis (2), ce châssis (2) comprenant au moins deux roues en contact avec le sol (3), et ce châssis (2) comprenant une extrémité avant (2a) et une extrémité arrière (2b),
un dispositif de manipulation d'animaux sous la forme d'une pince (4), cette pince (4) comprenant une base et deux parois opposées (4a), ces parois (4a) définissant un passage et une zone de serrage entre elles ;
une section avant (6), cette section avant (6) comprenant une base comprenant deux côtés opposés avec des parois (7) montant à partir de ceux-ci, ces parois (7) définissant un passage entre elles ;
une section arrière (5), cette section arrière (5) comprenant une base (12) comprenant deux côtés opposés avec des parois (11) montant à partir de ceux-ci, ces parois (11) définissant un passage entre elles ;
la section avant (6) étant positionnée au niveau de l'extrémité avant (2a) du châssis (2), la pince (4) séparant la section avant (6) de la section arrière (5) et la section avant (6) étant montée de manière pivotante sur le châssis (2) et étant mobile de manière pivotante par rapport au châssis (2) autour d'un axe horizontal de façon à ce que, lors de l'utilisation, la section avant (6) puisse être pivotée d'une position de stockage vers une position d'utilisation,
**caractérisé en ce que**
la section arrière (5) est positionnée au niveau de l'extrémité arrière (2b) du châssis (2), la section arrière (5) étant montée de manière pivotante sur le châssis (2) et étant mobile de manière pivotante par rapport au châssis (2) autour d'un axe horizontal (14) de façon à ce que, lors de l'utilisation, la section arrière (5) puisse être pivotée d'une position de stockage vers une position d'utilisation,
et au moins une des parois (7, 11) des sections avant (6) et arrière (5) est positionnée dans le passage défini par les parois (4a) de la pince (4) lorsque les sections avant (6) et arrière (5) sont dans la position de stockage.

2. Système portatif de manipulation d'animaux (1) selon la revendication 1, dans lequel les roues (3) comprennent des raccords à desserrage rapide.

3. Système portatif de manipulation d'animaux (1) selon la revendication 1 ou al revendication 2, dans lequel le châssis (2) comprend des vérins (16).

4. Système portatif de manipulation d'animaux (1) selon la revendication 3, dans lequel les vérins (16) sont disposés à une extrémité (2a, 2b) du châssis (2).

5. Système portatif de manipulation d'animaux (1) selon l'une des revendications 1 à 4, dans lequel :
• une des parois (4a) de la pince (4) est mobile de manière pivotante par rapport à l'autre paroi (4a) ; et/ou
• la base de la pince (4) est montée sur le châssis (2) de façon à ce que, lors de l'utilisation, la pince (4) puisse être basculée d'une orientation verticale vers une orientation horizontale.

6. Système portatif de manipulation d'animaux (1) selon l'une des revendications 1 à 5, dans lequel le châssis (2) comprend une paroi (10) entre la pince (4) et la section avant (6).

7. Système portatif de manipulation d'animaux (1) selon l'une des revendications 1 à 6, dans lequel la section avant (6) comprend au moins un montant vertical (7a).

8. Système portatif de manipulation d'animaux (1) selon la revendication 7, dans lequel l'extrémité avant (2a) du châssis (2) comprend au moins un montant vertical (2c) et dans lequel les montants verticaux (7a, 2c) de la section avant (6) et de l'extrémité avant (2a) du châssis (2) sont connectés par l'intermédiaire d'une broche (9), la broche (9) définissant l'axe horizontal du mouvement de pivotement de la section avant (6).

9. Système portatif de manipulation d'animaux (1) selon l'une des revendications 1 à 8, dans lequel les parois (7, 11) des sections avant (6) et arrière (5) sont montés de manière articulée sur leurs bases respectives.

10. Système portatif de manipulation d'animaux (1) selon l'une des revendications 1 à 9, dans lequel le châssis (2) comprend une paroi (13) entre la pince (4) et la section arrière (5).

11. Système portatif de manipulation d'animaux (1) selon l'une des revendications 1 à 10, dans lequel la section arrière (5) comprend au moins un montant vertical.

12. Système portatif de manipulation d'animaux (1) selon la revendication 11, dans lequel l'extrémité arrière du châssis comprend au moins un montant vertical et dans lequel les monts verticaux de la section arrière et l'extrémité arrière du châssis sont connectés par l'intermédiaire d'une broche, la broche définissant l'axe horizontal (14) du mouvement de pivotement de la section arrière.

13. Système portatif de manipulation d'animaux (1) selon la revendication 12, dans lequel au moins une des parois (11) de la section arrière (5) est segmentée en portions, au moins une des portions pouvant pivoter autour d'un axe vertical.

14. Procédé d'utilisation du système portatif de manipulation d'animaux (1) selon la revendication 1, ce procédé comprenant les étapes suivantes :
a) pivotement des sections avant (6) et arrière (5) du système (1) d'une position de stockage vers une position d'utilisation et
b) la direction d'un animal (8) vers la section avant (6) du système
**caractérisé en ce que**
au moins une des parois (7, 11) des sections avant (6) et arrière (5) est positionnée à l'intérieur du passage défini par les parois (4a) de la pince (4) lorsque les sections avant (6) et arrière (5) sont en position de stockage.

15. Procédé selon la revendication 14, dans lequel l'animal (8) est un mouton.
